# FASCICULE DE BREVET EUROPEEN

(11) **EP 1 607 904 B1**
(45) Date de publication et mention de la délivrance du brevet: **26.09.2007**
(21) Numéro de dépôt: 04102701.2
(22) Date de dépôt: 14.06.2004
(51) Int. Cl.: G06K 19/07, G06K 7/00

(54) **Procédé d'anti-collision simplifié pour détecter des dispositifs électroniques d'identification**
Vereinfachtes Verfahren zur Vermeidung von Kollisionen bei der Abfrage von elektronischen Identifikationsgeräten
Simplified anti-collison process for detecting electronic identification devices

(43) Date de publication de la demande: 21.12.2005
(73) Titulaire: EM Microelectronic-Marin SA, 2074 Marin (CH)
(72) Inventeur: Kanan, Riad, 2074 Marin (CH)
(74) Mandataire: Vigand, Philippe

(56) Documents cités:
- WO-A-02/47014
- WO-A-20/04047000
- US-A- 5 426 423

## Description

### DOMAINE TECHNIQUE

La présente invention concerne de manière générale un procédé de gestion et de suivi du processus de fabrication et de conditionnement d'objets de divers natures ou types. L'invention concerne plus particulièrement un procédé d'anti-collision simplifié appliqué à un ensemble regroupant un assortiment déterminé d'objets de divers natures ou types.

### ARRIÈRE-PLAN TECHNOLOGIQUE

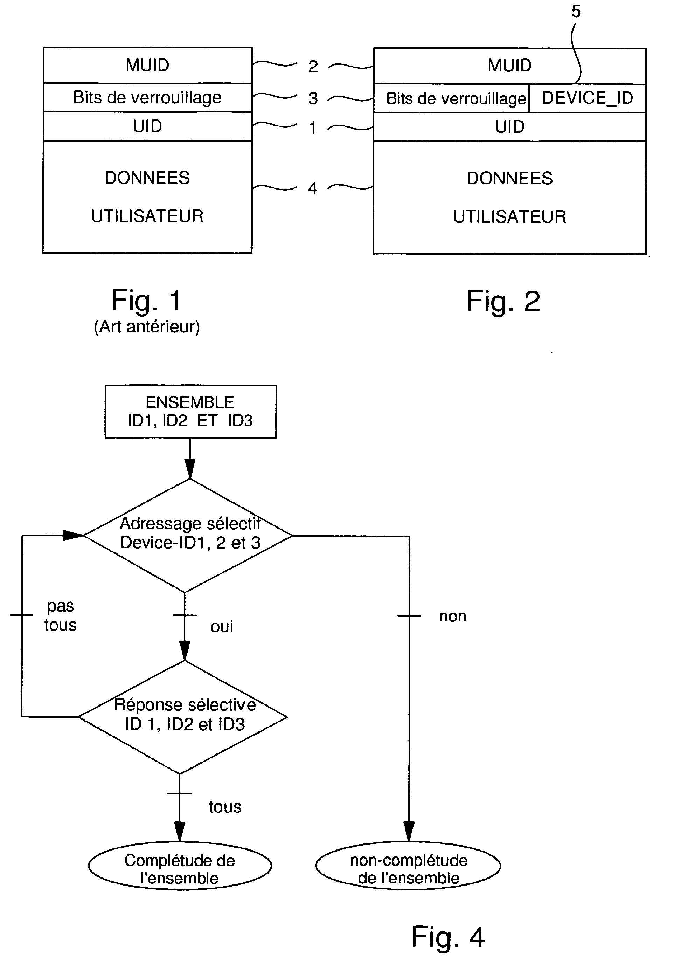

Il est connu d'assurer le suivi du processus de fabrication et de conditionnement d'objets de divers natures ou types en appliquant sur chacun de ces objets un dispositif électronique d'identification, par exemple un transpondeur radio-fréquence, comprenant des moyens de mémorisation programmables, représentés sous la forme d'un tableau à la figure 1, dans lesquels est programmé un identificateur universel (UID) appliqué par le fabricant du dispositif électronique d'identification. Cet identificateur universel est unique et non modifiable (Read_Only) ce qui permet d'identifier et donc de suivre de manière certaine chaque dispositif électronique d'identification.

Toutefois, cet identificateur universel (UID), de par son caractère non modifiable, se révèle contraignant suivant le procédé de gestion et de suivi que l'on désire mettre en place. En effet, il n'est pas possible de modifier cet identificateur universel (UID) de manière à inscrire des informations relatives à l'objet sur lequel est appliqué le dispositif électronique d'identification, comme par exemple le nom du fabricant, le lieu de fabrication ou encore la date de fabrication de l'objet.

II est par ailleurs connu d'allouer un espace modifiable (Read_Write), réservé au fabricant, dans les moyens de mémorisation programmables des dispositifs électroniques d'identification, destiné à contenir un identificateur de fabricant (MUID) permettant justement de fournir des informations sur le fabricant, ainsi qu'éventuellement sur le lieu ou la date de fabrication des objets sur lesquels sont appliqués de tels dispositifs électroniques d'identification.

Il est également connu du document US 5,426,423, un procédé pour enregistrer et vérifier des articles achetés dans un supermarché au moyen de transpondeurs dont sont pourvus les articles.

Cependant, il a été mis en évidence dans le cadre de la présente invention, que lors du conditionnement d'objets de natures ou de types différents sous la forme d'un ensemble regroupant un assortiment déterminé de ces objets, il est difficile et coûteux en temps d'assurer la gestion et le suivi des différents objets constituant cet ensemble. Il est notamment primordial de s'assurer qu'un ensemble contient bien tous les différents objets censés y être regroupés. Pour s'assurer de la complétude du contenu d'un ensemble au moment de son conditionnement, un procédé d'anti-collision traditionnel est généralement mis en oeuvre. Un tel procédé d'anti-collision consiste à interroger au moyen d'un lecteur radio-fréquence les dispositifs électroniques d'identification susceptibles d'être présents dans le champ du lecteur. Le lecteur interroge puis récupère ainsi, soit tous les identificateurs universel (UID), soit tous les identificateurs de fabricant (MUID) pour déterminer si l'ensemble interrogé comprend chaque objet qu'il est sensé regrouper. Quel que soit le type d'identificateur interrogé, le temps pour tous les détecter, ainsi que le temps pour vérifier si chacun d'eux correspond bien avec un identificateur d'un dispositif électronique d'identification appliqué sur chaque objet de l'ensemble, est nettement trop long, ce qui nuit particulièrement à la rapidité du procédé d'empaquetage. De plus cela s'avère relativement compliqué lorsque chaque type ou nature d'objet différent est fabriqué à des endroits différents, voire dans des pays différents, par des sous-traitants distincts utilisant des identificateurs de fabricant pouvant être de formats différents.

### RÉSUMÉ DE L'INVENTION

Un but principal de la présente invention consiste à mettre en oeuvre un procédé d'anti-collision simplifié permettant de s'assurer rapidement et simplement de la présence de chaque objet constitutif d'un assortiment déterminé d'objets de natures ou de types différents. Dans ce but, il est prévu en particulier de réserver un espace mémoire dans les moyens de mémorisation programmables des dispositifs d'identification appliqués sur les objets formant l'ensemble, espace mémoire dans lequel est programmé un identificateur d'objet (DEVICE_ID) qui identifie la nature ou le type de l'objet sur lequel le dispositif électronique d'identification est appliqué. Le premier but est atteint en utilisant, après regroupement des objets pour former un ensemble, un procédé d'anti-collision simplifié selon la revendication 1.

Ce procédé permet ainsi de vérifier rapidement la complétude d'un ensemble regroupant des objets de natures ou types différents. Pour cela, il suffit de vérifier la réception d'une réponse de la part de chaque objet formant l'ensemble.

Un autre but de la présente invention consiste à assurer une gestion et / ou un suivi d'un tel ensemble regroupant ces objets de natures ou de types différents. Dans ce but, il est prévu de programmer une valeur de gestion et / ou de suivi d'ensemble dans les moyens de mémorisation programmables de chaque dispositif électronique d'identification appliqué sur chacun des objets différents de cet ensemble.

Un autre but de la présente invention consiste à identifier un ensemble parmi d'autres ensembles. Dans ce but, il est prévu de programmer comme valeur de gestion et / ou de suivi d'ensemble, un identificateur d'ensemble (PACKAGE_ID) qui identifie l'ensemble parmi d'autres ensembles.

Un autre but de la présente invention consiste à exploiter l'identificateur d'ensemble pour permettre aux objets, qui sont dans ce but des dispositifs communicants munis d'une interface de communication sans fil, de communiquer ensemble par le biais de cette interface.

Un autre but de la présente invention consiste à exploiter l'identificateur d'ensemble pour effectuer un mariage des différents objets, qui sont dans ce but des dispositifs communicants munis d'une interface de communication sans fil, en vue de leur communication par le biais de cette interface.

Selon une application particulière, un ensemble est constitué de dispositifs électroniques communicants, tels des périphériques d'ordinateur sans fil sélectionnés dans un groupe comprenant notamment un clavier d'ordinateur, une souris d'ordinateur, un "track-ball", un "track-pad", une manette ou un contrôleur de jeu, un "joystick", une caméra, un téléphone portable, un assistant digital personnel (PDA), un récepteur radio-fréquence, un appareil photo numérique, toutes les combinaisons étant possibles.

Selon un autre aspect de l'invention, il est prévu de mettre en oeuvre un procédé de gestion et de suivi du processus de fabrication et de conditionnement d'objets de natures ou de types différents. Les objets sont destinés à être conditionnés et distribués sous la forme d'un ensemble regroupant un assortiment déterminé desdits objets, chacun de ces objets étant muni d'un dispositif électronique d'identification comprenant des moyens de mémorisation programmables. Le procédé comprend un étape de programmation, dans les moyens de mémorisation de chaque dispositif électronique d'identification, d'un identificateur d'objet, qui identifie la nature ou le type de l'objet sur lequel le dispositif électronique d'identification est appliqué et qui est identique aux identificateurs d'objets des objets de même nature ou de même type placés dans d'autres ensembles.

### BRÈVE DESCRIPTION DES DESSINS

D'autres caractéristiques et avantages de la présente invention apparaîtront plus clairement à la lecture de la description détaillée qui suit de modes de réalisation de l'invention donnés uniquement à titre d'exemple non limitatif et illustrés par les dessins annexés où :
- la figure 1, déjà mentionnée, représente sous la forme d'un tableau, des moyens de mémorisation programmables d'un dispositif électronique d'identification selon l'art antérieur ;
- la figure 2 représente sous la forme d'un tableau, des moyens de mémorisation programmables d'un dispositif électronique d'identification selon un mode de réalisation préféré de l'invention ;
- la figure 3 représente sous la forme d'un schéma-blocs, un dispositif électronique d'identification appliqué sur les différents objets formant un ensemble ;
- la figure 4 représente un diagramme illustrant un mode de mise en oeuvre du procédé simplifié d'anti-collision entre les dispositifs électroniques d'identification d'un ensemble selon l'invention ;
- la figure 5 représente un diagramme illustrant un mode de mise en oeuvre du procédé de gestion et / ou de suivi du processus de fabrication et de conditionnement selon l'invention ; et
- la figure 6 représente les étapes pour la mise en oeuvre du procédé de gestion et / ou de suivi du processus de fabrication et de conditionnement selon une application particulière de l'invention.

### DESCRIPTION DE MODES DE RÉALISATION PRÉFÉRÉS

La description qui suit présente à titre d'exemple différents modes de mise en oeuvre du procédé d'anti-collision simplifié appliqué à un assortiment déterminé d'objets de natures ou de types différents, et du procédé de gestion et de suivi du processus de fabrication et de conditionnement de ces objets de natures ou types différents.

Les objets constitutifs de l'assortiment déterminé, sont destinés à être conditionnés et distribués sous la forme d'un ensemble. Sur chacun de ces objets est appliqué un dispositif électronique d'identification au cours ou au terme de leur fabrication. Chaque dispositif électronique d'identification comprend des moyens de mémorisation programmables.

Les figures 1 et 2 représentent sous forme de tableaux, de tels moyens de mémorisation programmables d'un dispositif électronique d'identification appliqué sur chaque objet de l'assortiment déterminé d'objets, respectivement, selon une solution de l'art antérieur et selon un mode de réalisation de l'invention.

Ces moyens de mémorisation programmables, représentés à la figure 1 selon l'art antérieur, comprennent généralement différentes zones qui sont détaillées ci-après. Une première zone 1 est réservée pour contenir un identificateur universel (UID) programmé par le fabricant du dispositif électronique d'identification. Cet identificateur universel est unique et non modifiable, i.e. en lecture seulement, "read only" selon la terminologie anglaise. Il permet de distinguer un dispositif électronique d'identification de n'importe quel autre. Une deuxième zone 2 est réservée pour contenir un identificateur de fabricant (MUID) programmé généralement par le fabricant d'objets, qui distingue un fabricant d'objets d'un autre fabricant d'objets. Toutefois d'autres informations concernant, par exemple, le lieu ou la date de fabrication peuvent être également ajoutées en vue d'assurer le suivi des objets sur lesquels sont appliqués les dispositifs électroniques d'identification. Une troisième zone 3 est également réservée pour contenir des bits de verrouillage qui garantissent un accès autorisé aux données contenues dans les moyens de mémorisation, en particulier pour les opérations de lecture et d'écriture dans les zones réservées à cet effet. Enfin, les moyens de mémorisation comprennent une quatrième zone 4 qui est réservée aux données utilisateur, cette zone étant destinée à contenir les applications de l'utilisateur ainsi que les données relatives à ces applications.

La figure 2 représente des moyens de mémorisation d'un dispositif électronique selon un mode de réalisation préféré de l'invention. On retrouve comme dans le tableau de la figure 1, les première 1, deuxième 2, troisième 3 et quatrième 4 zones réservées respectivement pour contenir l'identificateur universel (UID) du dispositif électronique d'identification, l'identificateur de fabricant (MUID), les bits de verrouillage et les données utilisateur.

Cependant, en vue d'assurer une détection rapide et efficace de chacun des objets formant un ensemble, objets sur lesquels sont appliqués de tels dispositifs électroniques d'identification, il est prévu de pourvoir les moyens de mémorisation programmables des dispositifs électroniques d'identification, d'une cinquième zone 5 comprenant un identificateur d'objet (DEVICE_ID) destiné à identifier un type ou une nature d'objet parmi les autres types ou natures d'objet présent dans l'ensemble. Le nombre de bits de mémoire réservé dans la cinquième zone dépend du nombre d'objets de nature ou de type différents formant un ensemble.

Par exemple, dans le cas d'un assortiment constitué d'une souris d'ordinateur, d'un clavier et d'un récepteur radiofréquence, l'ensemble formé par ces trois objets comprend trois types d'objet, la cinquième zone devant ainsi comprendre au moins deux bits pour coder ces trois types d'objet différents. En pratique, il est prévu de préférence au moins un bit supplémentaire ce qui laisse l'opportunité d'ajouter un ou plusieurs types d'objet supplémentaires tout en utilisant la même architecture mémoire pour les moyens de mémorisation programmables. Selon un exemple préféré, la cinquième zone mémoire comprend 4 bits mémoire, ce qui permet de coder jusqu'à 16 types d'objet différents. Le codage des types d'objet pour cet exemple pourrait être alors le suivant :
- "0000" pour coder le type "souris d'ordinateur" dans les moyens de mémorisation des dispositifs électroniques d'identification appliqués sur les souris d'ordinateur;
- "0001" pour coder le type "clavier" dans les moyens de mémorisation des dispositifs électroniques d'identification appliqués sur les claviers; et
- "0010" pour coder le type "récepteur RF" dans les moyens de mémorisation des dispositifs électroniques d'identification appliqués sur les récepteurs RF.

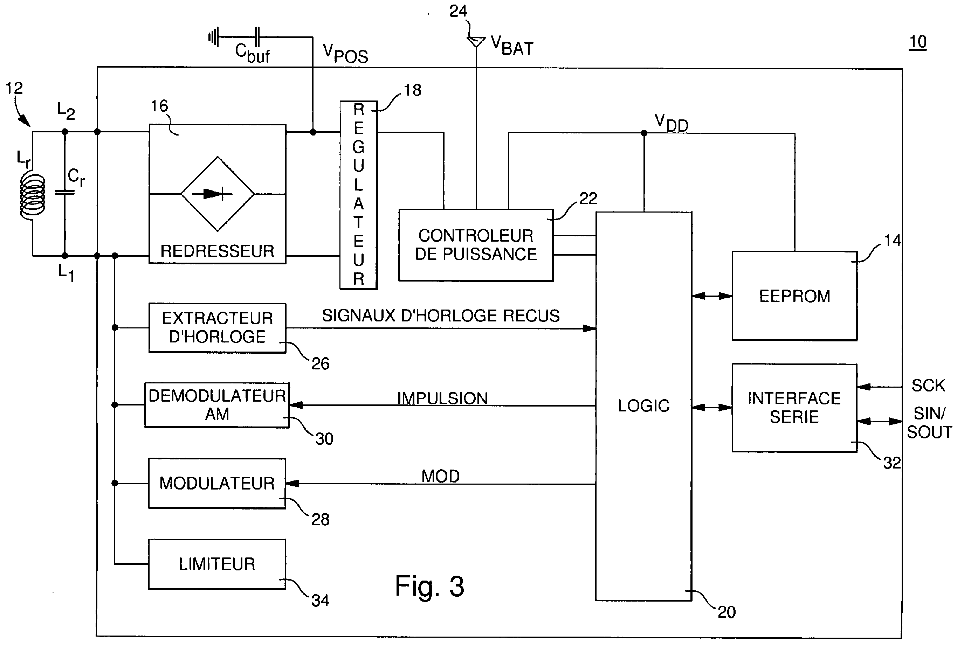

La figure 3 représente sous la forme d'un schéma-blocs, un dispositif électronique d'identification 10 appliqué sur les différents objets formant un ensemble. Selon cet exemple, le dispositif électronique d'identification comprend un certain nombre d'éléments détaillés ci-après.

Une antenne 12 du type LC permet de recevoir et d'émettre des signaux à une fréquence donnée, par exemple 13,56 MHz. Cette antenne 12 est utilisée en particulier pour recevoir des signaux d'horloge à une fréquence donnée, pour fournir une tension d'alimentation au dispositif électronique d'identification 10 si ce dernier est passif, et pour émettre en retour des données dépendant du contenu des moyens de mémorisation 14 du dispositif électronique d'identification.

La tension d'alimentation du dispositif électronique d'identification, en particulier dans le cas d'un dispositif de type passif, est extraite du champ électromagnétique externe au moyen d'un redresseur 16, par exemple du type redresseur en pont. Ainsi, en interne, le redresseur 16 est connecté aux bornes de l'antenne 12, pour convertir le signal reçu à la fréquence donnée en un signal continu servant de tension d'alimentation. Un régulateur 18 est connecté aux bornes du redresseur 16 pour prévenir des contraintes dues à des surtensions de la tension d'alimentation, en particulier, de l'unité logique 20. La sortie du régulateur 18 est utilisée pour alimenter la plupart des circuits logiques du dispositif électronique d'alimentation 10 dont l'unité logique 20, les moyens de mémorisation 14 ainsi que la plupart des circuits analogiques d'entrée (non détaillés ici).

Un circuit de contrôle de puissance 22 est connecté en sortie du régulateur 18. Ce circuit de contrôle de puissance 22 a trois fonctions. La première fonction est une fonction de (ré)initialisation après mise sous tension, "power-on reset" selon la terminologie anglaise, qui, suivant la tension régulée, génère un signal d'initialisation globale plaçant le dispositif électronique d'identification 10 dans un état initial approprié lors de la mise sous tension. Cette fonction garantit également que le dispositif électronique d'identification cesse de fonctionner lorsque tension d'alimentation devient inférieure à un seuil prédéterminé nécessaire pour un fonctionnement fiable du dispositif. II est prévu de préférence un double seuil, du type hysteresis, pour éviter un fonctionnement impropre du dispositif pour une tension d'alimentation proche de la tension minimum nécessaire (mise sous tension, mise hors tension répétitives).

La deuxième fonction est une fonction de vérification de puissance pour s'assurer durant une procédure d'écriture ou d'effacement que la tension d'alimentation disponible est suffisante avant d'effectuer une quelconque commande visant à modifier le contenu des moyens de mémorisation 14 du dispositif électronique d'identification. Cette vérification de puissance est effectuée avant le début effectif des séquences de programmation des moyens de mémorisation 14. Cela suppose que la force du champ électromagnétique externe reste suffisamment grande pour que l'exécution de la commande ne soit pas perturber durant le temps requis pour cette programmation. Une chute de tension en dessous du seuil limite prédéterminé due à un affaiblissement du champ électromagnétique externe pendant l'opération de programmation ne sera pas indiqué par le dispositif électronique d'identification 10 à moins que la fonction de "power-on reset" ne soit activée. Dans un tel cas, les données stockées dans les moyens de mémorisation 14 peuvent être corrompues.

La troisième fonction optionnelle est une fonction de double alimentation du dispositif électronique d'identification. La première source d'alimentation provient du champ électromagnétique externe émis par un lecteur radiofréquence. Cette première source d'alimentation n'est cependant disponible que lorsque le dispositif électronique d'identification 10 se trouve à proximité du lecteur radiofréquence, i.e. dans le champ électromagnétique de ce dernier. La seconde source d'alimentation, optionnelle, provient d'une batterie 24, avantageusement celle de l'objet sur lequel est appliqué le dispositif électronique d'identification. Cette deuxième source d'alimentation permet d'alimenter le dispositif électronique d'alimentation lorsque le champ électromagnétique externe n'est pas présent ou trop éloigné, c'est-à-dire par exemple lorsque la tension d'alimentation extraite du champ est inférieure à celle délivrée par la deuxième source d'alimentation. La commutation entre les sources d'alimentation est automatique et n'altère en rien le fonctionnement du dispositif électronique d'alimentation. Bien entendu, le dispositif électronique d'identification 10 est capable de fonctionner avec une seule de ces deux sources d'alimentation, soit celle obtenue par extraction du champ électromagnétique externe, soit celle provenant d'une batterie 24.

Le dispositif électronique d'identification est géré par l'unité logique 20 qui permet d'exécuter toutes les fonctions du dispositif électronique d'identification 10 au moyen de séquences de programmation préprogrammées.

Un extracteur d'horloge 26 permet d'obtenir un signal d'horloge pour cadencer l'unité logique 20 du dispositif. Le signal d'horloge est extrait du champ électromagnétique externe émis par un lecteur radiofréquence. Le signal obtenu en sortie de l'extracteur d'horloge 26 est de préférence relié à un "prescaler" (non représenté sur la figure), i.e. un diviseur préalable, ce qui permet de définir le cadencement désiré du dispositif électronique d'identification 10.

Un circuit de modulation 28 a pour but de moduler le signal RF du type à ondes entretenues provenant du lecteur, en modifiant le facteur de qualité Q du circuit d'accord (non représenté sur la figure) au moyen d'une charge résistive additionnelle connectée en parallèle avec la capacité de résonance C_{R}. Ces modifications du facteur de qualité induise un signal correspondant dans la bobine du lecteur.

Les communications depuis le lecteur vers le circuit électronique d'identification 10 sont faites par modulation d'amplitude de type tout ou rien, soit avec un index de 100% du champ électromagnétique. Un circuit de démodulation en amplitude 30 intégré au dispositif électronique d'identification est réalisé en utilisant une bascule simple. D'autres types de modulation pourront bien entendu être utilisés, comme par exemple, la modulation d'amplitude avec un index inférieur à 100% ou encore la modulation de fréquence.

Des moyens de mémorisation programmables 14, de préférence non volatile, comme par exemple une mémoire du type EEPROM, i.e. « Electrically Erasable Programmable Read Only Memory », sont utilisés pour stocker les données de l'application comprenant les différents identificateurs universel (UID), du fabricant (MUID), du type ou de nature d'objet (DEVICE_ID), ainsi que les bits de verrouillage et les donnés utilisateurs.

Une interface série 32 est composée de deux lignes. Une première ligne d'entrée SCK pour recevoir des signaux d'horloge et une deuxième ligne d'entrée/sortie SIN/SOUT utilisée pour la transmission de données, pour permettre la communication entre le dispositif électronique d'identification et un microcontrôleur de l'objet sur lequel il est appliqué.

Un limiteur 34 est également prévu pour protéger le dispositif électronique d'identification 10 contre des contraintes dues à des surtensions pouvant intervenir lorsque le champ électromagnétique est trop fort.

Le dialogue entre le lecteur et des dispositifs électroniques d'identification 10 du même type que celui représenté à la figure 3, plusieurs d'entre eux pouvant être présents en même temps dans le champ du lecteur, se déroule selon les opérations consécutives suivantes :
- activation du dispositif électronique d'identification lorsqu'il entre dans le champ électromagnétique du lecteur ;
- le dispositif électronique d'identification attend dans un mode silence une commande en provenance du lecteur ;
- transmission d'une commande par le lecteur comprenant l'identificateur de type ou de nature d'objet (DEVICE_ID) ;
- transmission d'une réponse de la part du dispositif électronique d'identification dont l'identificateur d'objet correspond à celui inclus dans la commande.

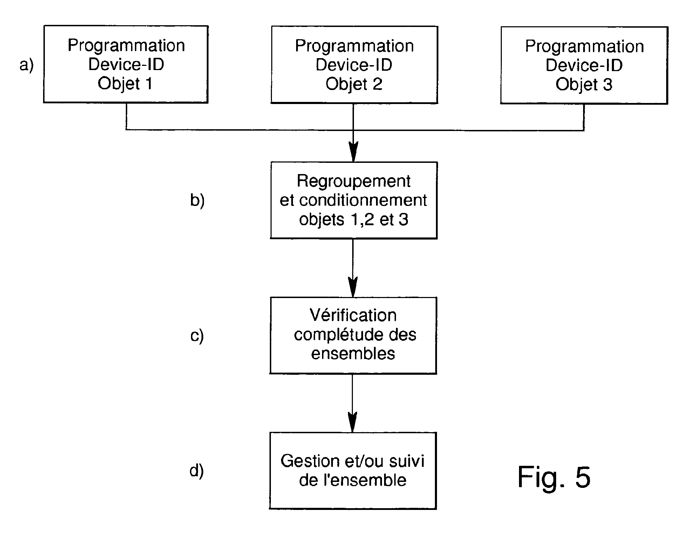

La figure 4 représente un diagramme d'un mode de mise en oeuvre du procédé simplifié d'anti-collision entre les différents dispositifs électroniques d'identification formant un ensemble.

Le procédé d'anti-collision est appliqué à un assortiment déterminé d'objets de natures ou de types différents, regroupés sous la forme d'un ensemble. Ainsi l'ensemble comprend un objet de chaque type ou nature sur chacun desquels a été appliqué un dispositif électronique d'identification (ID1, ID2 et ID3) comprenant des moyens de mémorisation programmables dans lesquels un identificateur d'objet (DEVICE_ID1, DEVICE_ID2 et DEVICE_ID3) a été programmé, différent pour chaque nature ou type d'objet de l'ensemble. En effet cet identificateur d'objet (DEVICE_ID) a pour but d'identifier la nature ou le type de l'objet sur lequel le dispositif électronique d'identification est appliqué. Cet identificateur d'objet est identique à celui des objets de même nature ou de même type placés dans d'autres ensembles.

Après regroupement desdits objets pour former ledit ensemble, chacun des dispositifs électroniques d'identification (ID1, ID2 et ID3) formant l'ensemble est adressé sélectivement au moyen des identificateurs d'objets (DEVICE_ID1, DEVICE_ID2 et DEVICE_ID3) de chacun desdits objets, qui sont connus à l'avance par le lecteur.

Si pour l'une des commandes d'adressage envoyées par le lecteur, aucune réponse (NON) n'est reçue, cela signifie que le dispositif électronique d'identification appliqué sur l'objet de l'ensemble appartenant au type d'objet adressé, n'est pas présent dans le champ du lecteur à ce moment. Le lecteur en déduit donc que l'ensemble considéré n'est pas complet.

Sinon, pour chaque commande d'adressage envoyée par le lecteur, sélectivement, chaque dispositif électronique d'identification appliqué sur l'objet de l'ensemble dont le type d'objet correspond à celui adressé, envoie une réponse (OUI), permettant au lecteur de s'assurer ainsi de la présence de l'objet correspondant.

Ces opérations d'adressage et de réponse sélectives des dispositifs électroniques d'identification adressés sont effectuées tant que le lecteur n'a pas reçu toutes les réponses attendues (PAS_TOUS). Ces opérations peuvent être interrompues dès que l'un des objets adressés via l'identificateur d'objet ne répond pas (NON). Lorsque tous les dispositifs électroniques d'identification ont répondu (TOUS), le lecteur est assuré de la complétude de l'ensemble.

Si l'on considère l'exemple d'un ensemble formé par trois objets constitués d'une souris d'ordinateur, d'un clavier et d'un récepteur munis chacun d'un dispositif électronique d'identification (ID1, ID2 et ID3) dans lequel est programmé un identificateur d'objet (DEVICE_ID1, DEVICE_ID2 et DEVICE_ID3), le lecteur va adresser l'un des trois objets au moyen de l'identificateur d'objet (DEVICE_ID1) correspondant, par exemple la souris d'ordinateur, qui si elle est présente dans le champ du lecteur va répondre (OUI) par l'intermédiaire du dispositif électronique d'identification (ID1) dont elle est munie. Le lecteur va ensuite adresser un autre des trois objets au moyen de son identificateur d'objet (DEVICE_ID2), par exemple le clavier qui, s'il est présent dans le champ du lecteur va répondre (OUI) par l'intermédiaire de son dispositif électronique d'identification (ID2). Le lecteur va enfin adresser le dernier des trois objets au moyen de son identificateur d'objet (DEVICE_ID3), dans cet exemple, le récepteur, qui s'il est présent dans le champ du lecteur va répondre (OUI) par l'intermédiaire de son dispositif électronique d'identification (ID3). Si les trois objets ont répondu (OUI), le lecteur est ainsi assuré de la complétude de cet ensemble. En revanche si l'un des trois objets n'a pas répondu (NON), alors le lecteur est informé de la non-complétude de cet ensemble.

Ce procédé simplifié d'anti-collision s'avère très rapide, du fait que chaque objet de l'ensemble est adressé au moyen d'un identificateur d'objet connu à l'avance, l'identificateur d'objet étant identique pour tous les objets de même nature ou type. Ainsi pour s'assurer de la complétude d'un ensemble, il suffit d'effectuer un nombre d'opérations d'adressage égal au nombre d'objets de l'ensemble.

L'invention concerne également un procédé de gestion et/ou de suivi du processus de fabrication et de conditionnement. Lors de, ou après, la fabrication des objets constitutifs d'un ensemble, un dispositif électronique d'identification est appliqué sur chacun de ces objets. Les moyens de mémorisation de chacun des dispositifs électroniques d'identification comprennent déjà l'identificateur universel (UID). Le fabricant des objets, qui appose généralement les dispositifs électroniques d'identification, programme de préférence l'identificateur de fabricant (MUID) dans les moyens de mémorisation.

Le procédé de gestion et/ou de suivi du processus et de conditionnement est représenté à la figure 5 sous la forme d'un diagramme reprenant les étapes après fabrication des objets et apposition sur chacun d'eux d'un dispositif électronique d'identification dont les moyens de mémorisation comprennent déjà l'identificateur universel (UID) et l'identificateur de fabricant (MUID).

La première étape (a) consiste à programmer un identificateur d'objet (DEVICE_ID) sur chaque objet. Cet identificateur d'objet identifie la nature ou le type de l'objet sur lequel le dispositif électronique d'identification est appliqué et est identique pour tous les objets de même nature ou de même type. Cette première étape (a) est réalisée avantageusement soit après l'application des dispositif électroniques d'identification par le fabricant des objets en question, soit après leur regroupement, lors de leur conditionnement, mais peut également être réalisée à tout moment entre leur fabrication et leur conditionnement.

La seconde étape (b) consiste justement dans le regroupement et le conditionnement des différents objets de manière à former des ensembles. Dans l'exemple déjà mentionné, l'ensemble regroupe une souris d'ordinateur, un clavier et un récepteur.

Une fois, les ensembles constitués, la troisième étape (c) consiste à vérifier la complétude des ensembles. Cette étape correspond aux étapes décrites en rapport avec la figure 4 et ne seront donc pas détaillées à nouveau ici.

Une quatrième étape optionnelle (d) consiste à programmer dans les moyens de mémorisation de chaque dispositif électronique d'identification correspondant à l'objet adressé, une valeur de gestion et / ou de suivi dudit ensemble.

Selon une application particulière, les différents objets sont des dispositifs électroniques communicants destinés à communiquer ensemble par le biais d'une interface de communication sans fil.

Selon cette application particulière, l'étape optionnelle (d) consiste à programmer un identificateur d'ensemble (PACKAGE_ID), qui identifie ledit ensemble parmi d'autres ensembles. L'identificateur d'ensemble (PACKAGE_ID) est alors exploité par les dispositifs électroniques communicants, au cours de leur fonctionnement, pour communiquer ensemble par le biais de leur interface de communication sans fil.

Selon une variante avantageuse de cette application particulière, l'étape optionnelle (d) consiste à programmer un identificateur d'ensemble (PACKAGE_ID) qui assure un « mariage » des divers dispositifs électroniques communicants en vue de leur communication par le biais de l'interface de communication sans fil. On notera que lors de cette étape de programmation (d) de l'identificateur d'ensemble (PACKAGE_ID), les dispositifs électroniques d'identification sont muets et que chaque dispositif électronique d'identification est activé sélectivement par transmission d'une commande d'activation incluant l'identificateur d'objet (DEVICE_ID) de l'objet concerné.

On notera encore que les dispositifs électroniques communicants sont choisis de préférence parmi des périphériques d'ordinateur sans fil sélectionnés dans le groupe comprenant un clavier d'ordinateur, une souris d'ordinateur, un "trackball", un "track-pad", une manette ou un contrôleur de jeu, un "joystick", une caméra, un téléphone portable, un assistant digital personnel (PDA), un récepteur radio-fréquence et des combinaisons de ces dispositifs électroniques communicants.

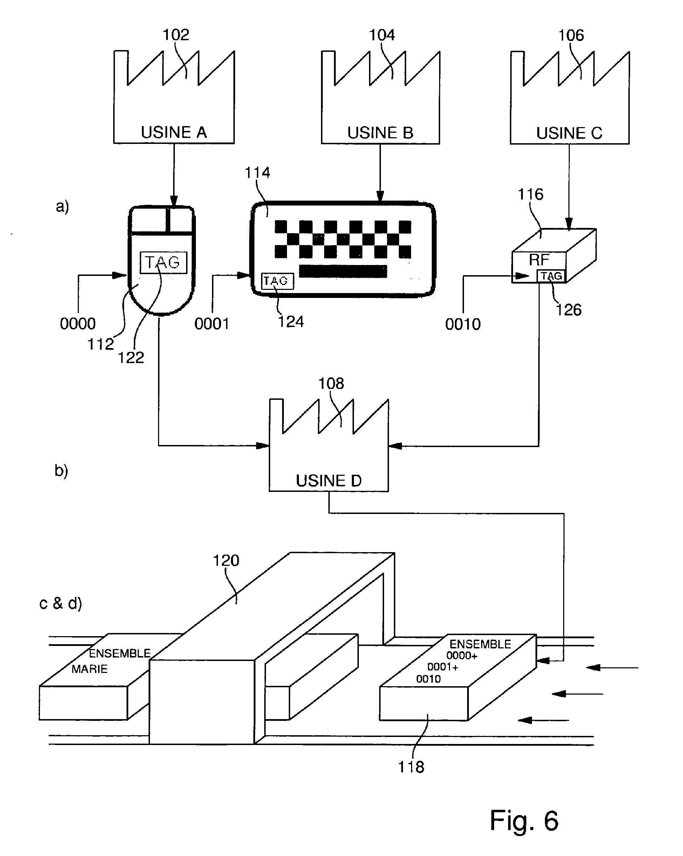

La figure 6 représente les étapes pour la mise en oeuvre du procédé de gestion et / ou de suivi du processus de fabrication et de conditionnement selon une application préférée de l'invention.

Selon cette application préférée, l'assortiment déterminé est constitué d'une souris d'ordinateur 112, d'un clavier 114 et d'un récepteur 116 formant après regroupement un ensemble 118. Ces trois objets sont des dispositifs électroniques communicants destinés à communiquer ensemble par le biais d'une interface de communication de préférence sans fil.

On notera ici, que chacun de ces types d'objet peut être fabriqué à des lieux de fabrication différents 102, 104 et 106, représentés ici sous la forme de trois usines A, B et C. Dans l'exemple représenté, les usines A, B et C fabriquent respectivement des souris d'ordinateur 112, des claviers 114 et des récepteurs radio-fréquences 116.

Sur chacun de ces objets de types différents est appliqué un dispositif électronique d'identification, portant respectivement les références numériques 122, 124 et 126. Comme mentionné précédemment la première étape (a) consiste à programmer un identificateur d'objet "0000", "0001" et "0010" pour identifier chaque type d'objet par rapport aux autres types d'objets dont est constitué l'ensemble 118.

Ensuite, lors d'une deuxième étape (b), les différents objets sont regroupés et empaquetés sous la forme d'ensembles qui seront soumis au procédé d'anti-collision simplifié, par exemple dans un quatrième lieu 108, représenté ici sous la forme d'une quatrième usine D.

Une fois les objets regroupés sous la forme d'un ensemble 118 contenant un objet de chaque type, i.e. une souris d'ordinateur, un clavier et un récepteur, une troisième étape (c) consiste à adresser sélectivement chacun des objets 112, 114 et 116 formant un ensemble 118, au moyen de leurs identificateurs d'objet respectifs "0000", "0001" et "0010", ce qui permet de vérifier la complétude de chaque ensemble en faisant passer chaque ensemble 118 au travers du champ électromagnétique d'un lecteur externe 120. Une quatrième étape optionnelle (d) consiste à programmer, lors de ce même passage dans le champ électromagnétique du lecteur externe, d'un identificateur d'ensemble (PACKAGE_ID) qui assure un « mariage » des divers dispositifs électroniques communicants en vue de leur communication par le biais de l'interface de communication sans fil.

On comprendra que diverses modifications et / ou améliorations évidentes pour l'homme du métier peuvent être apportées aux différents modes de mise en oeuvre des procédés selon l'invention décrits ici sans sortir du cadre de l'invention défini par les revendications annexées.

## Revendications

1. Procédé d'anti-collision simplifié, appliqué à un assortiment déterminé d'objets de natures ou de types différents, regroupés sous la forme d'un ensemble,
chacun desdits objets formant l'ensemble étant munis d'un dispositif électronique d'identification comprenant des moyens de mémorisation programmables dans lesquels a été programmé un premier identificateur, ou identificateur d'objet (DEVICE_ID), qui identifie la nature ou le type de l'objet sur lequel le dispositif électronique d'identification est appliqué,
le procédé comprenant, après regroupement desdits objets pour former ledit ensemble, les étapes suivantes :
- adresser sélectivement chacun desdits objets formant ledit ensemble au moyen des identificateurs d'objets (DEVICE_ID) de chacun desdits objets constituant l'assortiment déterminé et qui sont connus à l'avance;
- vérifier la complétude de l'ensemble consistant à vérifier la réception d'une réponse de chaque objet adressé.

2. Procédé selon la revendication 1, **caractérisé en ce qu'**il est également prévu l'étape suivante :
- programmer dans lesdits moyens de mémorisation de chaque dispositif électronique d'identification correspondant à l'objet adressé, une valeur de gestion et / ou de suivi dudit ensemble.

3. Procédé selon la revendication 2, **caractérisé en ce que** la valeur de gestion et / ou de suivi d'ensemble programmée est un second identificateur, ou identificateur d'ensemble (PACKAGE_ID), qui identifie ledit ensemble parmi d'autres ensembles.

4. Procédé selon la revendication 3, **caractérisé en ce que** lesdits objets sont des dispositifs électroniques communicants destinés à communiquer ensemble par le biais d'une interface de communication sans fil et **en ce que** ledit identificateur d'ensemble (PACKAGE_ID) est destiné à être exploité par les dispositifs électroniques communicants, au cours de leur fonctionnement, pour communiquer ensemble par le biais de ladite interface de communication sans fil.

5. Procédé selon la revendication 3, **caractérisé en ce que** lesdits objets sont des dispositifs électroniques communicants destinés à communiquer ensemble par le biais d'une interface de communication sans fil et **en ce que** ladite étape de programmation de l'identificateur d'ensemble (PACKAGE_ID) assure un « mariage » des divers dispositifs électroniques communicants en vue de leur communication par le biais de l'interface de communication sans fil.

6. Procédé selon la revendication 5, **caractérisé en ce que**, lors de ladite étape de programmation de l'identificateur d'ensemble (PACKAGE_ID), lesdits dispositifs électroniques d'identification sont muets et **en ce que** chaque dispositif électronique d'identification est activé sélectivement par transmission d'une commande d'activation incluant l'identificateur d'objet (DEVICE_ID) de l'objet concerné.

7. Procédé selon l'une des revendications 4 à 6, **caractérisé en ce que** lesdits dispositifs électroniques communicants sont des périphériques d'ordinateur sans fil sélectionnés dans le groupe comprenant un clavier d'ordinateur, une souris d'ordinateur, un "trackball", un "track-pad", une manette ou un contrôleur de jeu, un "joystick", une caméra, un téléphone portable, un assistant digital personnel (PDA), un récepteur radio-fréquence et des combinaisons de ces dispositifs électroniques communicants.

8. Procédé selon l'une des revendications précédentes, **caractérisé en ce que** chaque identificateur d'objet est constitué d'un mot binaire à N bits, de préférence supérieur ou égal à 3, permettant l'identification de 2^{N} objets de types et de natures distincts d'objets.

9. Procédé selon l'une quelconque des revendications précédentes, **caractérisé en ce qu'**au préalable est mis en oeuvre un procédé de gestion et de suivi du processus de fabrication et de conditionnement d'un ensemble comprenant les étapes suivantes :
- programmer dans les moyens de mémorisation de chaque dispositif électronique d'identification, le premier identificateur, ou identificateur d'objet (DEVICE_ID), qui identifie la nature ou le type de l'objet sur lequel le dispositif électronique d'identification est appliqué et qui est identique aux objets de même nature ou de même type placés dans d'autres ensembles;
- regrouper et conditionner lesdits objets pour former ledit ensemble.

## Claims

1. Simplified anti-collision method, applied to a determined assortment of objects of different natures or types, regrouped in the form of a set,
each of said objects forming the set being provided with an electronic identification device comprising programmable storage means into which there has been programmed a first identifier, or object identifier (DEVICE_lD), which identifies the nature or type of the object to which the electronic identification is applied,
the method including, after regrouping said objects to form said set, the following steps:
- selectively addressing each of said objects forming said set by means of the object identifiers (DEVICE_ID1) of each of said objects forming the determined assortment and which are known in advance;
- checking the completeness of the set consisting in checking the reception of a response from each object addressed.

2. Method according to claim 1, **characterized in that** the following step is also provided:
- programming a management and/or follow up value of said set into said storage means of each electronic identification device corresponding to the object addressed.

3. Method according to claim 2, **characterized in that** the programmed management and/or follow up value is a second identifier, or set identifier (PACKAGE_ID), which identifies said set from among other sets.

4. Method according to claim 3, **characterized in that** said objects are communicating electronic objects communicating with each other via a wireless communication interface and **in that** said set identifier (PACKAGE_ID) is to be exploited by the communicating electronic devices, during operation, for communicating with each other via said wireless communication interface.

5. Method according to claim 3, **characterised in that** said objects are communicating electronic objects communicating with each other via a wireless communication interface and **in that** said step of programming the set identifier (PACKAGE_ID) ensures a "match" of the various communicating electronic devices for their communication via the wireless communication interface.

6. Method according to claim 5, **characterized in that**, during said step of programming the set identifier (PACKAGE_ID), said electronic identification devices are silent and **in that** each electronic identification device is selectively activated by transmission of an activation command including the object identifier (DEVICE_ID) of the object concerned.

7. Method according to any of claims 4 to 6, **characterized in that** said communicating electronic devices are wireless computer peripheral units selected from the group including a computer keyboard, a computer mouse, a "trackball", a "track-pad", a handle or game controller, a "joystick", a video camera, a portable telephone, a personal digital assistant (PDA), a radio-frequency receiver and combinations of these communicating electronic devices.

8. Method according to any of the preceding claims, **characterized in that** each object identifier is formed of a binary word with N bits, preferably greater than or equal to 3, allowing identification of 2^{N} objects of distinct types and natures.

9. Method according to any one of preceding claims, **characterized in that** beforehand is implemented a method of managing and following up the manufacturing and packaging process of objects of a set including the following steps:
- programming, in the storage means of each electronic identification device, the first identifier, or object identifier (DEVICE_lD), which identifies the nature of type of the object to which the electronic identification device is applied and which is identical to the objects of the same nature or same type placed in other sets.
- regrouping and packaging said objects to form said set.

## Patentansprüche

1. Vereinfachtes Kollisionsverhinderungsverfahren, das auf eine bestimmte Zusammenstellung von Objekten unterschiedlicher Natur oder unterschiedlichen Typs angewendet wird, die in Form einer Gesamtheit umgruppiert sind,
wobei jedes der Objekte, die die Gesamtheit bilden, mit einer elektronischen Identifizierungsvorrichtung versehen ist, die programmierbare Speichermittel enthält, in denen ein erster Identifizierer oder Objekt-Identifizierer (DEVICE_lD) programmiert worden ist, der die Natur oder den Typ des Objekts identifiziert, auf den die elektronische Identifizierungsvorrichtung angewendet wird,
wobei das Verfahren nach der Umgruppierung der Objekte, um die Gesamtheit zu bilden, die folgenden Schritte umfasst:
- wahlweises Adressieren jedes der die Gesamtheit bildenden Objekte mittels der Objekt-Identifizierer (DEVICE_lD) jedes der Objekte, die die bestimmte Zusammenstellung bilden und die im Voraus bekannt sind;
- Verifizieren der Vollständigkeit der Gesamtheit, das darin besteht, den Empfang einer Antwort von jedem adressierten Objekt zu verifizieren.

2. Verfahren nach Anspruch 1, **dadurch gekennzeichnet, dass** es außerdem den folgenden Schritt umfasst:
- Programmieren eines Wertes zum Steuern und/oder Verfolgen der Gesamtheit in den Speichermitteln jeder elektronischen Identifizierungsvorrichtung, die dem adressierten Objekt entspricht.

3. Verfahren nach Anspruch 2, **dadurch gekennzeichnet, dass** der programmierte Wert zum Steuern und/oder Verfolgen der Gesamtheit ein zweiter Identifizierer oder Gesamtheits-Identifizierer (PACKAGE_ID) ist, der die Gesamtheit unter anderen Gesamtheiten identifiziert.

4. Verfahren nach Anspruch 3, **dadurch gekennzeichnet, dass** die Objekte kommunizierende elektronische Vorrichtungen sind, die dazu bestimmt sind, miteinander auf dem Umweg über eine drahtlose Kommunikationsschnittstelle zu kommunizieren, und dass der Gesamtheits-Identifizierer (PACKAGE_lD) dazu bestimmt ist, von den kommunizierenden elektronischen Vorrichtungen während ihres Betriebs ausgewertet zu werden, um gemeinsam auf dem Umweg über die drahtlose Kommunikationsschnittstelle zu kommunizieren.

5. Verfahren nach Anspruch 3, **dadurch gekennzeichnet, dass** die Objekte kommunizierende elektronische Vorrichtungen sind, die dazu bestimmt sind, miteinander auf dem Umweg über eine drahtlose Kommunikationsschnittstelle zu kommunizieren, und dass der Schritt des Programmierens des Gesamtheits-Identifizierers (PACKAGE_lD) eine "Vereinigung" verschiedener kommunizierender elektronischer Vorrichtungen im Hinblick auf ihre Kommunikation auf dem Umweg über die drahtlose Kommunikationsschnittstelle sicherstellt.

6. Verfahren nach Anspruch 5, **dadurch gekennzeichnet, dass** im Schritt des Programmierens des Gesamtheits-Identifizierers (PACKAGE_ID) die elektronischen Identifizierungsvorrichtungen stumm sind und dass jede elektronische Identifizierungsvorrichtung durch Übertragen eines Aktivierungsbefehls, der den Objekt-Identifizierer (DEVICE_ID) des betreffenden Objekts enthält, wahlweise aktiviert wird.

7. Verfahren nach einem der Ansprüche 4 bis 6, **dadurch gekennzeichnet, dass** die kommunizierenden elektronischen Vorrichtungen drahtlose Computer-Peripheriegeräte sind, die aus der Gruppe ausgewählt sind, die eine Computertastatur, eine Computermaus, einen "Trackball", ein "Track-Pad", einen Steuerhebel oder einen Spiele-Controller, einen "Joystick", eine Kamera, ein tragbares Telephon, einen persönlichen digitalen Assistenten (PDA), einen Hochfrequenzempfänger und Kombinationen dieser kommunizierenden elektronischen Vorrichtungen umfasst.

8. Verfahren nach einem der vorhergehenden Ansprüche, **dadurch gekennzeichnet, dass** jeder Objekt-Identifizierer aus einem binären Wort mit N Bits, wobei N vorzugsweise größer oder gleich 3 ist, gebildet ist, was eine Identifizierung von 2^{N} Objekten unterschiedlichen Typs und unterschiedlicher Natur erlaubt.

9. Verfahren nach einem der vorhergehenden Ansprüche, **dadurch gekennzeichnet, dass** im Voraus ein Verfahren zum Steuern und Verfolgen des Prozesses der Fertigung und der Konditionierung einer Gesamtheit ausgeführt wird, das die folgenden Schritte umfasst:
- Programmieren des ersten Identifizierers oder Objekt-Identifizierers (DEVICE_ID), der die Natur oder den Typ des Objekts identifiziert, auf das die elektronische Identifizierungsvorrichtung angewendet wird und das mit Objekten derselben Natur oder desselben Typs, die in anderen Gesamtheiten angeordnet sind, übereinstimmt, in den Speichermittels jeder elektronischen Identifizierungsvorrichtung;
- Umgruppieren und Konditionieren der Objekte, um die Gesamtheit zu bilden.
